# EUROPEAN PATENT APPLICATION

(11) **EP 4 779 288 A1**
(43) Date of publication of application: **22.07.2026**
(21) Application number: 24888548.5
(22) Date of filing: 24.10.2024
(51) Int. Cl.: G01N 1/42, G01N 1/28, G02B 21/34

(54) **SAMPLE FREEZING DEVICE**

(30) Priority: 09.11.2023 JP 2023191579
(71) Applicant: Inter-University Research Institute Corporation High Energy Accelerator Research Organization, Tsukuba-shi Ibaraki 305-0801 (JP)
(72) Inventor: TAKASU, Akira, Tsukuba-shi, Ibaraki 305-0801 (JP)
(74) Representative: Dehns
(86) International application number: PCT/JP2024/037959
(87) International publication number: WO 2025/100251

(57) **Abstract**

A sample freezing device includes a first support portion, a retraction mechanism, a second support portion, a movement mechanism, and a control unit. The first support portion supports a removal portion for removing an excess sample solution from an impregnation portion impregnated with the sample solution. The retraction mechanism retracts the first support portion from a removal position at which the removal portion is able to remove the sample solution from the impregnation portion. The second support portion supports the impregnation portion. The movement mechanism moves the second support portion so that the impregnation portion enters the inside of a freezing space in which the sample solution is frozen. The control unit is configured to control the retraction mechanism and the movement mechanism. The control unit controls retraction of the first support portion by the retraction mechanism and movement of the second support portion by the movement mechanism so that a time from when the first support portion begins to retract from the removal position until the impregnation portion enters the inside of the freezing space is one second or less.

## Description

### TECHNICAL FIELD

The present invention relates to a sample freezing device.

Priority is claimed on Japanese Patent Application No. 2023-191579 filed on November 9, 2023, the content of which is incorporated herein by reference.

### BACKGROUND ART

Conventionally, a technology in which a sample such as a protein is frozen in a solution so that a state of the sample is fixed in a desired condition is known.
According to such a method, it becomes easy to observe the sample in a desired state.

Freezing of the sample is performed by, for example, the device described in Non-Patent Document 1. In this device, an operator first impregnates a grid with a sample solution. Next, filter paper is brought into contact with the grid by an arm provided in the device, and excess sample solution is removed. Finally, the arm supporting the filter paper retracts from the grid, and the device drops the grid into a freezing liquid. Thereby, the sample is frozen together with the solution.

### Citation List

### Patent Document

Non-Patent Document 1: Thermo Fisher Scientific Inc., "Preparation of Cryo-EM Samples Using the Vitrobot System," [online], Thermo Fisher Scientific Inc., [retrieved November 8, 2023], Internet <URL: https://www.thermofisher.com/jp/ja/home/electron-microscopy/products/sample-preparation-equipment-em/vitrobot-system.html>

### SUMMARY OF INVENTION

### Technical Problem

As a result of experiments conducted by inventors of the present application, it was found that, in the device described in Non-Patent Document 1, it may be difficult to freeze the sample in a desired state.

The present invention has been made in consideration of such circumstances, and an objective of the present invention is to provide a sample freezing device that facilitates freezing a sample in a desired state.

### Solution to Problem

In order to solve the above-described problems, a sample freezing device according to aspect 1 of the present invention includes a first support portion supporting a removal portion for removing an excess sample solution from an impregnation portion impregnated with the sample solution, a retraction mechanism retracting the first support portion from a removal position at which the removal portion is able to remove the sample solution from the impregnation portion, a second support portion supporting the impregnation portion, a movement mechanism moving the second support portion so that the impregnation portion enters the inside of a freezing space in which the sample solution is frozen, and a control unit configured to control the retraction mechanism and the movement mechanism, in which the control unit controls retraction of the first support portion by the retraction mechanism and movement of the second support portion by the movement mechanism so that a time from when the first support portion begins to retract from the removal position until the impregnation portion enters the inside of the freezing space is one second or less.

Also, according to aspect 2 of the present invention, in the sample freezing device of aspect 1, the retraction mechanism may include a first attracted body moving in conjunction with the first support portion, and a first magnetic attraction portion driven by a current to magnetically attract the first attracted body, and the control unit may control the current flowing through the first magnetic attraction portion.

Also, according to aspect 3 of the present invention, in the sample freezing device of aspect 1 or 2, the movement mechanism may include a second attracted body engaging with the second support portion to restrict movement of the second support portion, and a second magnetic attraction portion driven by the current to magnetically attract the second attracted body so that the engagement between the second attracted body and the second support portion is released, and the control unit may control the current flowing through the second magnetic attraction portion.

Also, according to aspect 4 of the present invention, in the sample freezing device of any one of aspects 1 to 3, the movement mechanism may include a biasing portion for promoting movement of the second support portion.

Also, according to aspect 5 of the present invention, in the sample freezing device of any one of aspects 1 to 4, the removal portion may be provided on a single side as viewed from the impregnation portion.

Also, according to aspect 6 of the present invention, in the sample freezing device of any one of aspects 1 to 5, an optical unit configured to change a traveling direction of light from a light source so that the impregnation portion is irradiated with the light from the light source may be further included.

Also, according to aspect 7 of the present invention, in the sample freezing device of aspect 6, at least a part of the optical unit may move following the impregnation portion when the impregnation portion is moved toward the freezing space by the movement mechanism.

### Advantageous Effects of Invention

According to the above-described aspects of the present invention, it is possible to provide a sample freezing device that facilitates freezing a sample in a desired state.

### BRIEF DESCRIPTION OF DRAWINGS

[FIG. 1] A perspective view illustrating a sample freezing device according to an embodiment of the present invention.
[FIG. 2A] A view illustrating an example of a grid impregnated with a sample solution.
[FIG. 2B] An enlarged view of region B illustrated in FIG. 2A.
[FIG. 2C] An enlarged view of region C illustrated in FIG. 2B.
[FIG. 3] An exploded view illustrating a vicinity of a base portion according to the embodiment of the present invention.
[FIG. 4] A cross-sectional view taken along line IV-IV illustrated in FIG. 1.
[FIG. 5] An exploded view illustrating a vicinity of a second support portion according to the embodiment of the present invention.
[FIG. 6A] A view illustrating an engagement between a restriction mechanism and the second support portion according to the embodiment of the present invention.
[FIG. 6B] A view illustrating a state following FIG. 6A.
[FIG. 7] A view illustrating a vicinity of a first support portion according to the embodiment of the present invention.
[FIG. 8A] A view illustrating a state in which the first support portion according to the embodiment of the present invention is at a removal position.
[FIG. 8B] A view illustrating a state following FIG. 8A.
[FIG. 8C] A view illustrating another state following FIG. 8A.
[FIG. 9A] A schematic view of the sample freezing device according to the embodiment of the present invention from the front.
[FIG. 9B] A view illustrating a state following FIG. 9A.
[FIG. 9C] A view illustrating a state following FIG. 9B.
[FIG. 10] An image obtained by capturing a sample frozen by a sample freezing device described in Non-Patent Document 1.
[FIG. 11] An image obtained by capturing a sample frozen by the sample freezing device according to the embodiment of the present invention.
[FIG. 12A] A view showing a three-dimensional model of the sample obtained by a three-dimensional structural analysis based on the image shown in FIG. 11.
[FIG. 12B] A view showing a three-dimensional model of the sample rotated by 90° around a rotation axis AX1 illustrated in FIG. 12A.
[FIG. 12C] A view showing a three-dimensional model of the sample rotated by 45° around a rotation axis AX2 illustrated in FIG. 12A.

### DESCRIPTION OF EMBODIMENTS

Hereinafter, a sample freezing device according to an embodiment of the present invention will be described with reference to the drawings.

### <Overview>

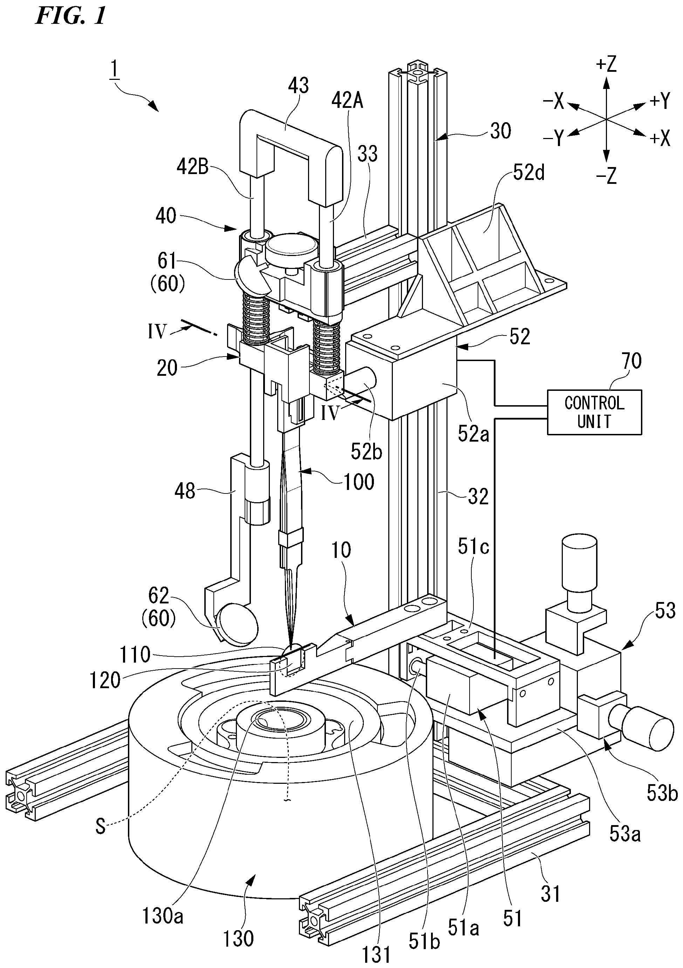

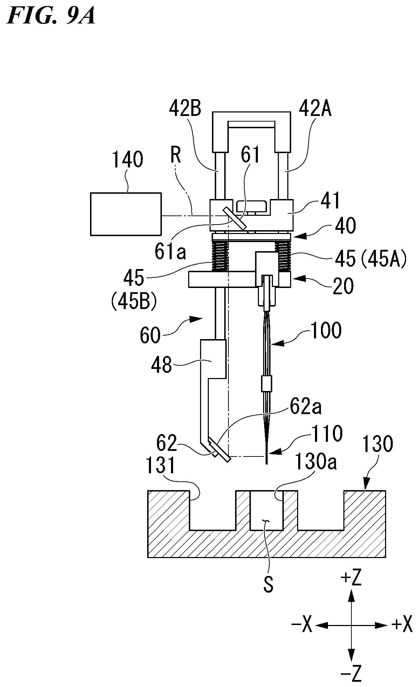

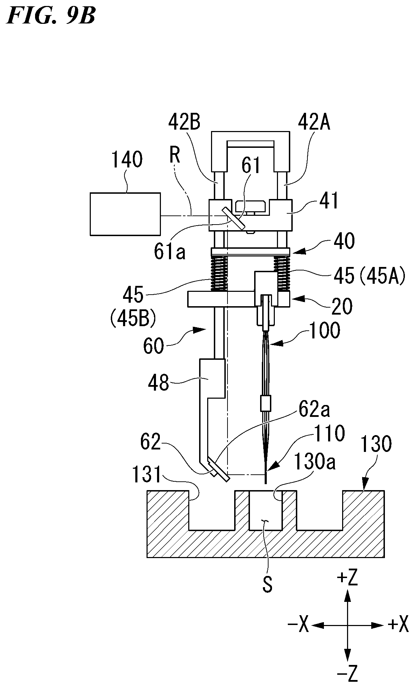

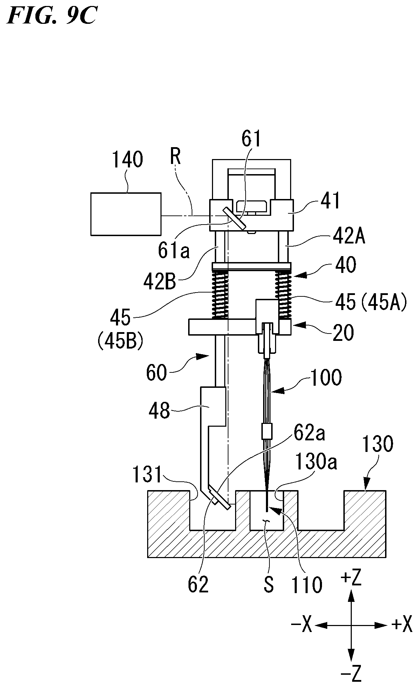

As illustrated in FIG. 1, a sample freezing device 1 according to the present embodiment includes a first support portion 10, a second support portion 20, a stand 30, a guide portion 40, a retraction mechanism 51, a restriction mechanism 52, an optical unit 60, and a control unit 70. The sample freezing device 1 according to the present embodiment is used together with a tweezer assembly 100, a grid 110 impregnated with the sample solution, a filter paper 120, a freezing container 130, and a light source 140 (see FIGS. 9A to 9C). The grid 110 is supported by the second support portion 20 via the tweezer assembly 100, and the filter paper 120 is supported by the first support portion 10 (details will be described later).

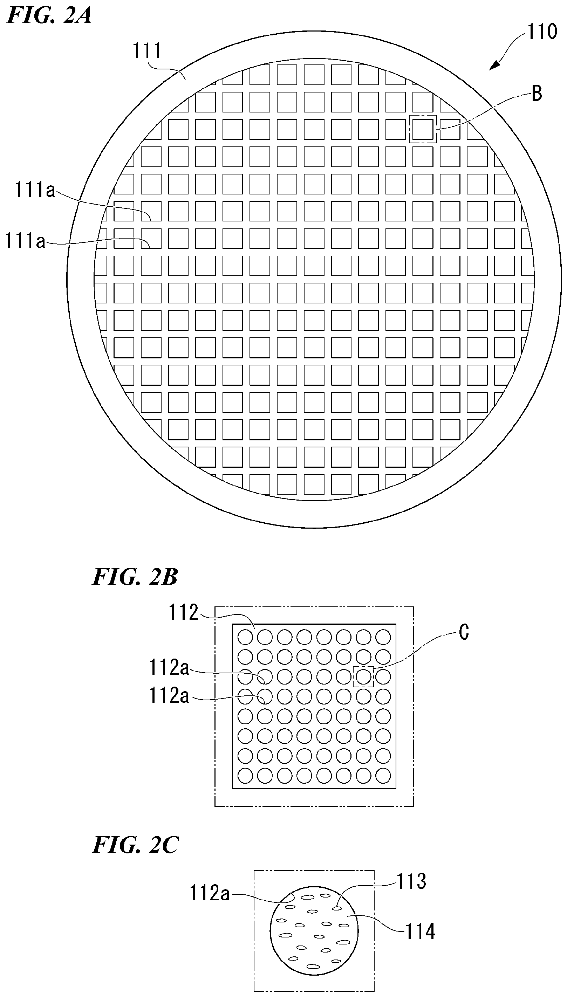

FIG. 2A is a view illustrating an example of a shape of the grid 110. As illustrated in FIG. 2A, the grid 110 has a plate portion 111 in which a plurality of holes 111a are formed. The plate portion 111 is, for example, a copper thin plate. An outer shape of the plate portion 111 is, for example, a circular shape having a diameter of several millimeters. A shape of the hole 111a is, for example, a square shape, each side having a length of several tens of micrometers.

As illustrated in FIG. 2B, a membrane portion 112 is provided in each of the holes 111a of the plate portion 111. The membrane portion 112 is, for example, a carbon membrane having a thickness of several tens of nanometers. A plurality of micropores 112a are formed in the membrane portion 112. A shape of the micropore 112a is, for example, a circular shape having a diameter of about several micrometers. As illustrated in FIG. 2C, a sample solution 114 in which a sample 113 is dissolved impregnates respective micropores 112a of the membrane portion 112. The grid 110 retains the sample solution 114 in the micropores 112a by surface tension. The sample 113 may be, for example, a protein. The grid 110 for being impregnated with the sample solution is also referred to as an impregnation portion.

The filter paper 120 (see FIG. 1) functions as a removal portion for removing excess sample solution from the grid 110. The filter paper 120 absorbs the excess sample solution from the grid 110.

The freezing container 130 has a freezing space S for freezing the sample solution. The freezing space S is filled with, for example, a freezing liquid capable of freezing the sample solution. Examples of the freezing liquid include liquid ethane, liquid propane, a mixed solution thereof, and the like. The freezing container 130 is placed, for example, on a work surface such as a desk.

An opening 130a and a recessed portion 131 are formed on an upper surface of the freezing container 130 according to the present embodiment. The opening 130a communicates with the freezing space S. The recessed portion 131 has an annular shape in a plan view. The recessed portion 131 surrounds the opening 130a in a plan view. The recessed portion 131 may be filled with liquid ethane.

After the excess sample solution is removed from the grid 110 by the filter paper 120, the sample freezing device 1 according to the present embodiment causes the grid 110 to enter the freezing space S through the opening 130a. Thereby, the sample freezing device 1 freezes the sample solution. Note that, the grid 110 may be impregnated with the sample solution after the grid 110 is supported by the second support portion 20. Alternatively, the grid 110 may be supported by the second support portion 20 after the grid 110 is impregnated with the sample solution.

Hereinafter, an XYZ orthogonal coordinate system is set to describe a positional relationship of components of the sample freezing device 1. In the present specification, an X-axis direction may be referred to as a left-right direction X, a Y-axis direction may be referred to as a front-rear direction Y, and a Z-axis direction may be referred to as a vertical direction Z. A view from the vertical direction Z is referred to as a plan view. A+X direction is referred to as rightward, and a -X direction is referred to as leftward. A+Y direction is referred to as rearward (rear side), and a -Y direction is referred to as forward (front side). A +Z direction is referred to as upward, and the -Z direction is referred to as downward. In the following description, a case in which the vertical direction Z coincides with a direction in which gravity acts (a direction of gravity) will be described. However, the vertical direction Z does not necessarily have to coincide with the direction of gravity. In other words, the vertical direction Z may be inclined with respect to the direction of gravity.

### <Stand 30>

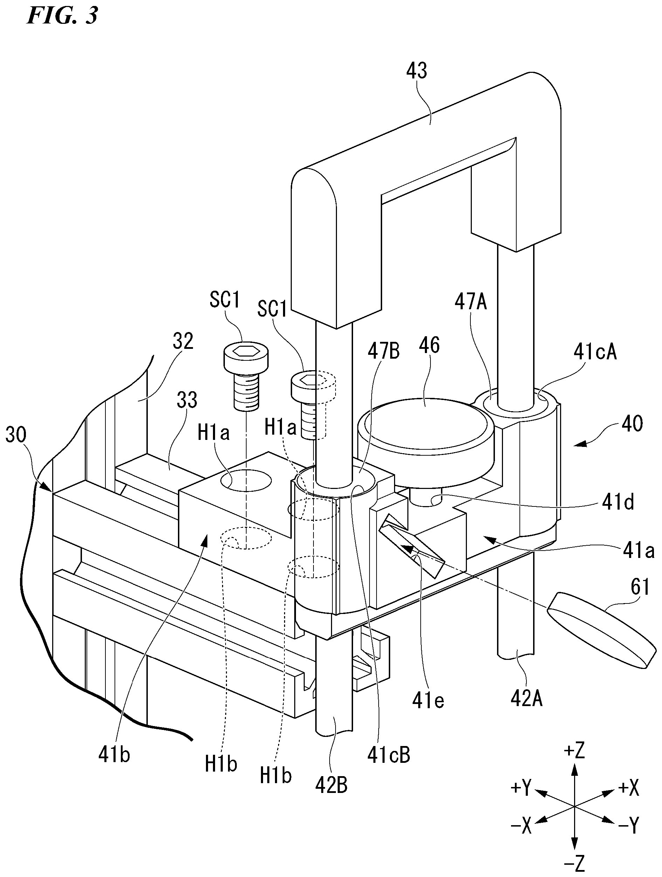

As illustrated in FIGS. 1 and 3, the stand 30 according to the present embodiment includes a bottom portion 31, a column portion 32, and a beam portion 33. The bottom portion 31 is placed, for example, on a work surface such as a desk. The bottom portion 31, the column portion 32, and the beam portion 33 are fixed to one another.

As illustrated in FIG. 1, the bottom portion 31 according to the present embodiment has a U shape that protrudes rearward (toward a rear side) in a plan view. The freezing container 130 is disposed, for example, inside the U shape of the bottom portion 31. The column portion 32 extends upward from a portion of the bottom portion 31 positioned on the rear side. The beam portion 33 protrudes forward (toward the front side) from an appropriate position of the column portion 32 in the vertical direction Z. As illustrated in FIG. 3, at least one (two in the illustrated example) screw hole H1b disposed at an interval in the front-rear direction Y is formed on an upper surface of the beam portion 33.

### <Guide portion 40>

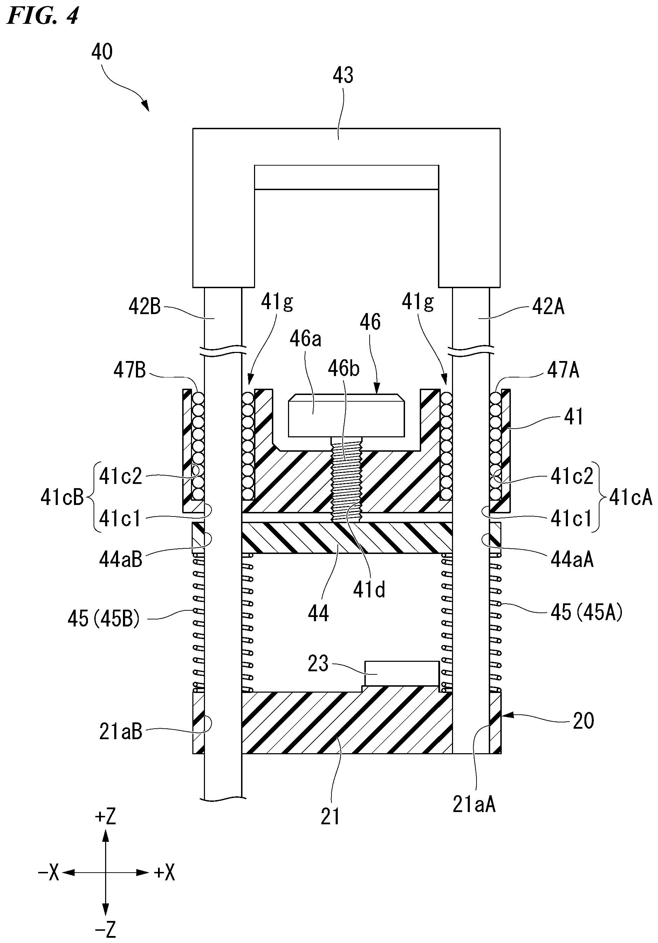

The guide portion 40 guides movement of the second support portion 20 (details will be described later). As illustrated in FIGS. 3 and 4, the guide portion 40 according to the present embodiment includes a base portion 41, a pair of guide rods 42A and 42B (a first guide rod 42A and a second guide rod 42B), a handle 43, a spring push 44, a biasing portion 45 (a first coil spring 45A and a second coil spring 45B), an adjustment screw 46, a pair of linear bushes 47A and 47B (a first linear bush 47A and a second linear bush 47B), and a mirror fixing portion 48 (see FIG. 1).

As illustrated in FIGS. 1 and 4, each of the pair of guide rods 42A and 42B extends in the vertical direction Z. The second support portion 20 is fixed to the pair of guide rods 42A and 42B (details will be described later).

As illustrated in FIG. 4, each of the guide rods 42A and 42B penetrates the base portion 41, the spring push 44, and the biasing portion 45 (the first coil spring 45A and the second coil spring 45B) in the vertical direction Z. Each of the guide rods 42A and 42B is configured to be movable relative to the base portion 41, the spring push 44, and the biasing portion 45 in the vertical direction Z (details will be described later).

The base portion 41, the spring push 44, and the biasing portion 45 are arranged in that order from top to bottom with the guide rods 42A and 42B inserted therethrough. The base portion 41, the spring push 44, and the biasing portion 45 are positioned above the second support portion 20 fixed to the guide rods 42A and 42B.

As illustrated in FIGS. 1 and 4, the handle 43 is fixed to the pair of guide rods 42A and 42B to connect an upper end part of the first guide rod 42A and an upper end part of the second guide rod 42B. In the illustrated example, the second guide rod 42B is longer than the first guide rod 42A. Therefore, a lower end part of the second guide rod 42B is positioned below a lower end part of the first guide rod 42A.

As illustrated in FIG. 3, the base portion 41 according to the present embodiment has a main portion 41a extending in the left-right direction X and a fixing portion 41b extending in the front-rear direction Y.

The fixing portion 41b protrudes rearward from a left end part of the main portion 41a. At least one screw hole H1a (two in the illustrated example) disposed at an interval in the front-rear direction Y is formed in the fixing portion 41b.

The screw hole H1a penetrates the fixing portion 41b in the vertical direction Z. When a screw SC1 is threaded into the screw hole H1b through the screw hole H1a, the fixing portion 41b is fixed to the beam portion 33. When the fixing portion 41b is fixed to the beam portion 33, the base portion 41 is fixed to the stand 30.

As illustrated in FIGS. 3 and 4, a pair of guide holes 41cA and 41cB (a first guide hole 41cA and a second guide hole 41cB), an adjustment hole 41d, and a mirror hole 41e are formed in the main portion 41a.

The pair of guide holes 41cA and 41cB are positioned at both end parts of the main portion 41a in the left-right direction X. That is, the first guide hole 41cA is positioned at a right end part of the main portion 41a, and the second guide hole 41cB is positioned at a left end part of the main portion 41a.

As illustrated in FIG. 4, the pair of guide holes 41cA and 41cB each penetrate the main portion 41a in the vertical direction Z. The pair of guide rods 42A and 42B are inserted through the pair of guide holes 41cA and 41cB, respectively. That is, the first guide rod 42A is inserted through the first guide hole 41cA, and the second guide rod 42B is inserted through the second guide hole 41cB.

In the present embodiment, each of the guide holes 41cA and 41cB has a small diameter portion 41c1 and a large diameter portion 41c2. The small diameter portion 41c1 opens to a lower surface of the main portion 41a. The large diameter portion 41c2 opens to an upper surface of the main portion 41a. The small diameter portion 41c1 and the large diameter portion 41c2 communicate with each other in the vertical direction Z.

A diameter of the small diameter portion 41c1 is larger than a diameter of the guide rods 42A and 42B. Thereby, the guide rods 42A and 42B are configured to be movable relative to the base portion 41 in the vertical direction Z.

A diameter of the large diameter portion 41c2 is larger than a diameter of the small diameter portion 41c1. Therefore, with the guide rods 42A and 42B inserted through the guide holes 41cA and 41cB, a gap 41g is formed between an inner circumferential surface of the large diameter portion 41c2 and an outer circumferential surface of each of the guide rods 42A and 42B.

The pair of linear bushes 47A and 47B described above are disposed in the gap 41g. That is, the first linear bush 47A is disposed in the gap 41g between the outer circumferential surface of the first guide rod 42A and the inner circumferential surface of the large diameter portion 41c2 of the first guide hole 41cA. The second linear bush 47B is disposed in the gap 41g between the outer circumferential surface of the second guide rod 42B and the inner circumferential surface of the large diameter portion 41c2 of the second guide hole 41cB.

The pair of linear bushes 47A and 47B each guide a movement direction of the pair of guide rods 42A and 42B in the vertical direction Z. That is, the first linear bush 47A guides a movement direction of the first guide rod 42A in the vertical direction Z, and the second linear bush 47B guides a movement direction of the second guide rod 42B in the vertical direction Z. When the linear bushes 47A and 47B are used, it is possible to smoothly guide movement of the guide rods 42A and 42B in the vertical direction Z while suppressing positional deviation of the guide rods 42A and 42B in the left-right direction X and the front-rear direction Y.

The adjustment hole 41d is positioned at a center part of the main portion 41a in the left-right direction X. The adjustment hole 41d penetrates the main portion 41a in the vertical direction Z. A helical protrusion is formed on an inner circumferential surface of the adjustment hole 41d. The protrusion is threadedly engaged with an outer circumferential surface of a body portion 46b (details will be described later) of the adjustment screw 46.

As illustrated in FIG. 3, the mirror hole 41e opens to a front surface of the main portion 41a. A first mirror 61 (details will be described later) of the optical unit 60 is inserted into the mirror hole 41e. Thereby, the first mirror 61 is fixed to the mirror hole 41e. A shape of the mirror hole 41e corresponds to a shape of the first mirror 61.

As illustrated in FIG. 4, the spring push 44 extends in the left-right direction X. A pair of through holes 44aA and 44aB through which the pair of guide rods 42A and 42B are inserted are formed in the spring push 44. That is, the first guide rod 42A is inserted through the first through hole 44aA, and the second guide rod 42B is inserted through the second through hole 44aB.

Diameters of the through holes 44aA and 44aB are larger than diameters of the guide rods 42A and 42B. Thereby, the guide rods 42A and 42B and the spring push 44 are made movable relative to each other in the vertical direction Z.

The biasing portion 45 biases the second support portion 20 downward. The biasing portion 45 according to the present embodiment includes the first coil spring 45A through which the first guide rod 42A is inserted, and the second coil spring 45B through which the second guide rod 42B is inserted. However, the configuration of the biasing portion 45 may be modified as appropriate as long as it is capable of biasing the second support portion 20 downward.

Inner diameters of the coil springs 45A and 45B are larger than outer diameters of the guide rods 42A and 42B. Thereby, the guide rods 42A and 42B and the coil springs 45A and 45B are made movable relative to each other in the vertical direction Z.

The adjustment screw 46 is threaded into the adjustment hole 41d of the base portion 41 from above. The adjustment screw 46 has a head portion 46a and the body portion 46b. The body portion 46b extends downward from the head portion 46a. An outer diameter of the head portion 46a is larger than an outer diameter of the body portion 46b and an inner diameter of the adjustment hole 41d.

On an outer circumferential surface of the body portion 46b, a helical protrusion that is threadedly engaged with the inner circumferential surface of the adjustment hole 41d is formed. The body portion 46b is longer than the adjustment hole 41d. That is, a dimension of the body portion 46b in the vertical direction Z is greater than a dimension of the adjustment hole 41d in the vertical direction Z. Therefore, when the threaded insertion of the adjustment screw 46 is advanced to some extent, a lower end of the body portion 46b protrudes downward from a lower surface of the base portion 41 and comes into contact with an upper surface of the spring push 44.

When the threaded insertion of the adjustment screw 46 is further advanced in this state, a lower end of the body portion 46b compresses the coil springs 45A and 45B in the vertical direction Z via the spring push 44. Thereby, a biasing force exerted by the coil springs 45A and 45B (the biasing portion 45) on the second support portion 20 increases. In other words, an elastic energy accumulated in the biasing portion 45 increases. In this way, when an amount of threaded insertion of the adjustment screw 46 is adjusted, it is possible to adjust a magnitude of the biasing force exerted by the biasing portion 45 on the second support portion 20 (the elastic energy accumulated in the biasing portion 45).

As illustrated in FIG. 1, the mirror fixing portion 48 is fixed to a lower end part of the second guide rod 42B. A second mirror 62 (details will be described later) of the optical unit 60 is fixed to a lower end part of the mirror fixing portion 48. Note that, as long as it is possible to fix the second mirror 62 while securing an irradiation path R to be described later (see FIGS. 9A to 9C), a shape or the like of the mirror fixing portion 48 may be appropriately modified.

### <Second support portion 20, tweezer assembly 100, and restriction mechanism 52>

As illustrated in FIGS. 4 to 6B, the second support portion 20 includes a main body portion 21, an insertion portion 22, and an engagement portion 23.

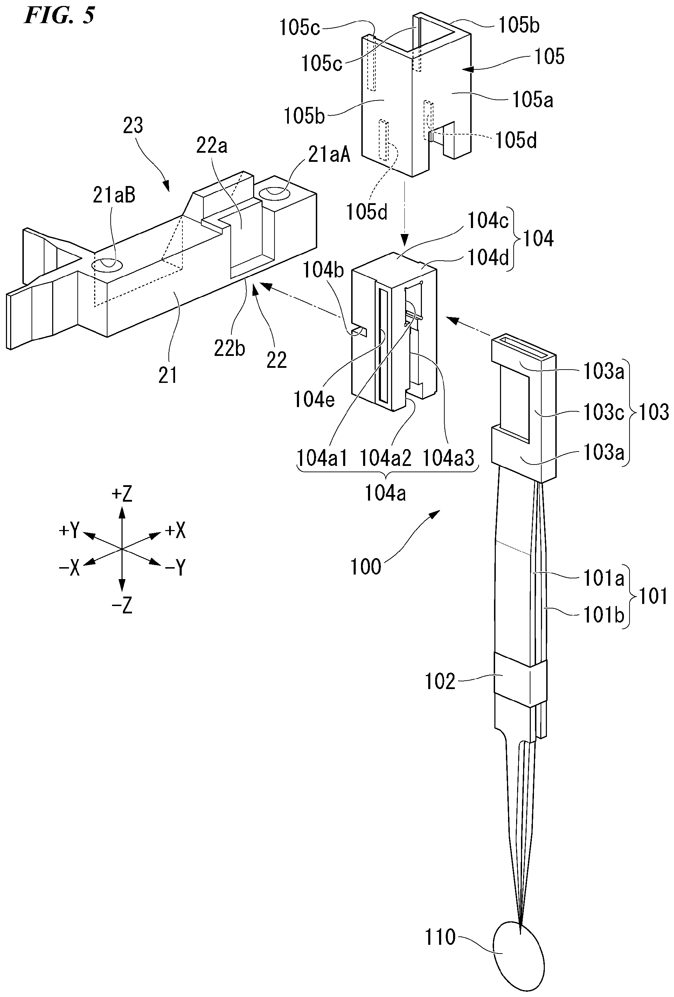

As illustrated in FIGS. 4 and 5, the main body portion 21 extends in the left-right direction X. A pair of fixing holes 21aA and 21aB are formed at both end parts of the main body portion 21 in the left-right direction X. That is, the first fixing hole 21aA is positioned at a right end part of the main body portion 21, and the second fixing hole 21aB is positioned at a left end part of the main body portion 21.

As illustrated in FIG. 4, each of the pair of fixing holes 21aA and 21aB penetrates the main body portion 21 in the vertical direction Z. The pair of guide rods 42A and 42B are respectively inserted into the pair of fixing holes 21aA and 21aB. That is, the first guide rod 42A is inserted into the first fixing hole 21aA, and the second guide rod 42B is inserted into the second fixing hole 21aB.

Here, the first guide rod 42A is fixed to (an inner circumferential surface of) the first fixing hole 21aA, and the second guide rod 42B is fixed to (an inner circumferential surface of) the second fixing hole 21aB. Thereby, the second support portion 20 is fixed to the pair of guide rods 42A and 42B. When the second support portion 20 is fixed to both of the pair of guide rods 42A and 42B, the second support portion 20 exhibits an effect of suppressing deviation in relative position between the guide rods 42A and 42B.

Note that, shapes of the fixing holes 21aA and 21aB may be modified as appropriate as long as it is possible to fix the guide rods 42A and 42B. For example, the first fixing hole 21aA does not necessarily have to penetrate the main body portion 21. More specifically, the first fixing hole 21aA may open only to an upper surface of the main body portion 21 and may not open to a lower surface of the main body portion 21.

As illustrated in FIG. 5, the insertion portion 22 is positioned at a right end part of the main body portion 21. The insertion portion 22 according to the present embodiment has a recessed portion 22a that opens to a front surface and an upper surface of the main body portion 21. When such a recessed portion 22a is formed, a protrusion 22b protruding from a rear-side surface (+Y-side surface) of the recessed portion 22a toward a front side (-Y side) is formed at a lower part of the recessed portion 22a.

The insertion portion 22 is a portion of the second support portion 20 for supporting the grid 110. In the present embodiment, the second support portion 20 (insertion portion 22) indirectly supports the grid 110 impregnated with the sample solution via the tweezer assembly 100. Hereinafter, a structure of the tweezer assembly 100 and a method for fixing the tweezer assembly 100 to the second support portion 20 (insertion portion 22) will be described.

As illustrated in FIG. 5, the tweezer assembly 100 according to the present embodiment includes tweezers 101, a band 102, an attachment portion 103, an intermediate body 104, and a cover 105.

The tweezers 101 have a pair of plate materials 101a and 101b. Upper end parts of the plate materials 101a and 101b are connected to each other. The tweezers 101 support the grid 110 by gripping the grid 110 with distal end parts of the plate materials 101a and 101b.

The band 102 has an annular shape. The tweezers 101 are inserted through the band 102. When the tweezers 101 are inserted through the band 102, the tweezers 101 are tightened by the band 102, and the plate materials 101a and 101b come close to each other. Thereby, a state in which the grid 110 is gripped by the distal end parts of the plate materials 101a and 101b is maintained.

The attachment portion 103 is attached to an upper end part of the tweezers 101. The attachment portion 103 has an upper band 103a, a lower band 103b, and a connection portion 103c.

The bands 103a and 103b have an annular shape. The tweezers 101 are inserted through the bands 103a and 103b. The bands 103a and 103b are disposed at a predetermined distance in the vertical direction Z. The lower band 103b is positioned on a side below the upper band 103a. The connection portion 103c connects end parts of the bands 103a and 103b on the front side (-Y side).

The intermediate body 104 has a small-width portion 104c and a large-width portion 104d connected to a front side (-Y side) of the small-width portion 104c. Each of the small-width portion 104c and the large-width portion 104d has a substantially rectangular parallelepiped shape. A width (a dimension in the left-right direction X) of the large-width portion 104d is greater than a width of the large-width portion 104d.

An insertion hole 104a opens to a front surface of the large-width portion 104d. An upper end part of the tweezers 101, to which the attachment portion 103 is attached, is inserted into the insertion hole 104a.

Specifically, the insertion hole 104a includes an upper hole 104a1, a lower hole 104a2, and an intermediate hole 104a3. The upper band 103a is inserted into the upper hole 104a1. The lower band 103b is inserted into the lower hole 104a2. A portion of the tweezers 101 positioned between the bands 103a and 103b is inserted into the intermediate hole 104a3.

Here, a width (a dimension in the left-right direction X) of the upper hole 104a1 is substantially equal to a width of the upper band 103a, and a width of the lower hole 104a2 is substantially equal to a width of the lower band 103b. Thereby, the tweezers 101 are fixed to the intermediate body 104 in a state in which deviation in the left-right direction X is suppressed.

A width of the intermediate hole 104a3 is smaller than the width of the upper band 103a. Thereby, when the upper band 103a is inserted into the upper hole 104a1, a lower surface of the upper band 103a comes into contact with a stepped portion between the upper hole 104a1 and the intermediate hole 104a3. Thereby, the tweezers 101 are fixed to the intermediate body 104 in a state in which deviation in the vertical direction Z is suppressed.

Grooves 104e extending in the vertical direction Z are formed on both side surfaces of the large-width portion 104d. In the illustrated example, the groove 104e does not open to either an upper surface or a lower surface of the large-width portion 104d.

The small-width portion 104c has a slit 104b that opens to a rear surface and both side surfaces of the small-width portion 104c. The protrusion 22b of the second support portion 20 is inserted into the slit 104b. When the protrusion 22b is inserted into the slit 104b, a portion of the small-width portion 104c positioned above the slit 104b is inserted into the recessed portion 22a of the second support portion 20.

Here, a width (a dimension in the left-right direction X) of the small-width portion 104c is substantially equal to a width of the recessed portion 22a of the second support portion 20. Thereby, the intermediate body 104 is fixed to the second support portion 20 in a state in which deviation in the left-right direction X is suppressed. A dimension of the slit 104b in the vertical direction Z is substantially equal to a dimension of the protrusion 22b of the second support portion 20 in the vertical direction Z. Thereby, the intermediate body 104 is fixed to the second support portion 20 in a state in which deviation in the vertical direction Z is suppressed.

The cover 105 is placed over the large-width portion 104d of the intermediate body 104 with the tweezers 101 inserted into the intermediate body 104. Specifically, the cover 105 has a front plate 105a that covers a front surface of the large-width portion 104d, and a pair of side plates 105b that cover both side surfaces of the large-width portion 104d. When the front plate 105a covers the front surface of the large-width portion 104d, the tweezers 101 are fixed to the intermediate body 104 in a state in which deviation in the front-rear direction Y is suppressed.

An upper protrusion 105c and a lower protrusion 105d are formed on each of the side plates 105b. The upper protrusion 105c and the lower protrusion 105d protrude inward in the left-right direction X from an inner surface of the side plate 105b in the left-right direction X. The upper protrusion 105c extends downward from a corner portion positioned at an upper end and a rear end (+Y end) of the side plate 105b along a rear-side edge of the side plate 105b. The lower protrusion 105d extends upward from a central portion of a lower end of the side plate 105b.

When the cover 105 is placed over the large-width portion 104d, the upper protrusion 105c engages with a stepped portion between the small-width portion 104c and the large-width portion 104d. When the cover 105 is placed over the large-width portion 104d, the side plate 105b is inserted into the groove 104e of the large-width portion 104d. Thereby, the cover 105 is fixed to the intermediate body 104.

As described above, according to the insertion portion 22 and the tweezer assembly 100 of the present embodiment, it is possible to support the tweezers 101 supporting the grid 110 by the second support portion 20 in a state in which deviation and vibration with respect to the second support portion 20 are suppressed.

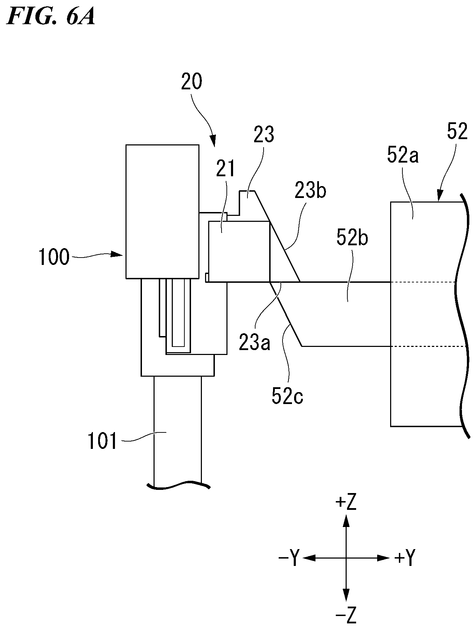

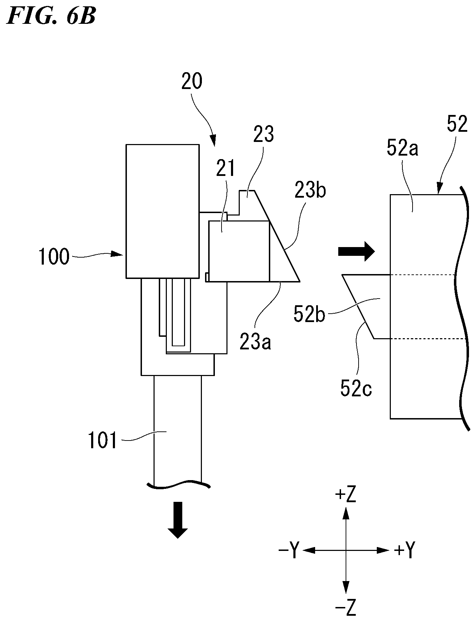

As illustrated in FIGS. 6A and 6B, the engagement portion 23 protrudes rearward from the main body portion 21. The engagement portion 23 has an engagement surface 23a facing downward. A rear surface of the engagement portion 23 is an inclined surface 23b. The inclined surface 23b is inclined toward the front as it goes upward.

The engagement portion 23 is a portion for restricting movement of the second support portion 20 by the restriction mechanism 52. Hereinafter, a structure of the restriction mechanism 52 and a method for restricting movement of the second support portion 20 by the restriction mechanism 52 will be described.

The restriction mechanism 52 according to the present embodiment has a second magnetic attraction portion 52a and a second attracted body 52b.

The second attracted body 52b is a columnar conductor extending in the front-rear direction Y. In the illustrated example, a front end surface of the second attracted body 52b is an inclined surface 52c. The inclined surface 52c is inclined toward the front as it goes upward similarly to the inclined surface 23b of the engagement portion 23.

The second magnetic attraction portion 52a is driven by a current and, as illustrated in FIGS. 6A and 6B, magnetically attracts the second attracted body 52b toward the rear (in the -Y direction). The second magnetic attraction portion 52a may be, for example, a solenoid coil. The second magnetic attraction portion 52a is fixed to the stand 30 (the column portion 32) by a fixing component 52d (see FIG. 1).

The restriction mechanism 52 may have a biasing body (not illustrated) that biases the second attracted body 52b toward the front (in the +Y direction). In this case, when the current flowing through the second magnetic attraction portion 52a is stopped, it is possible to return the second attracted body 52b that has been magnetically attracted to its original position (the position illustrated in FIG. 6A) by the biasing force of the biasing body.

As illustrated in FIG. 6A, in a state in which the second magnetic attraction portion 52a does not magnetically attract the second attracted body 52b, an upper surface of the second attracted body 52b is in contact with the engagement surface 23a of the engagement portion 23.

Here, as described above, the guide rods 42A and 42B and the second support portion 20 fixed thereto are movable in the vertical direction Z relative to the base portion 41 fixed to the stand 30 (see also FIG. 4). Therefore, when the second attracted body 52b is not in contact with the engagement surface 23a (see FIG. 6B), the second support portion 20 supporting the tweezer assembly 100 (the grid 110) moves downward (drops) under the influence of gravity (see also FIG. 4). The above-described biasing portion 45 promotes such movement (dropping) of the second support portion 20 by biasing the second support portion 20 downward.

That is, in a state in which the second magnetic attraction portion 52a does not magnetically attract the second attracted body 52b, the second attracted body 52b engages with the engagement portion 23 to restrict movement of the second support portion 20 by an upper surface of the second attracted body 52b being in contact with the engagement surface 23a (see FIG. 6A). Then, the second magnetic attraction portion 52a is driven by a current to magnetically attract the second attracted body 52b so that such engagement is released (see FIG. 6B). Note that, at this time, it is preferable that the engagement surface 23a be formed of a material having a low coefficient of friction (for example, polytetrafluoroethylene) so that sliding between the engagement surface 23a and the second attracted body 52b is smoothly performed.

In this way, according to the restriction mechanism 52 and guide portion 40 of the present embodiment, it is possible to move (drop) the second support portion 20 toward the freezing container 130 (freezing space S) at any timing by controlling the current flowing through the second magnetic attraction portion 52a. Particularly, according to the guide portion 40 of the present embodiment, it is possible to accurately guide a dropping position of the second support portion 20 by the linear bushes 47A and 47B and the guide rods 42A and 42B (see FIG. 4).

In the present specification, the restriction mechanism 52 and the guide portion 40 that are capable of moving the second support portion 20 at any timing as described above may be collectively referred to as a "movement mechanism". The movement mechanism moves the second support portion 20 so that the grid 110 moves into the freezing space S of the freezing container 130 (see also FIG. 1). Note that, the current flowing through the second magnetic attraction portion 52a is controlled by the control unit 70 (details will be described later).

Note that, when the second support portion 20, which has once been dropped, is returned to its original position (the position illustrated in FIG. 6A), firstly, the current flowing through the second magnetic attraction portion 52a is stopped. Next, for example, an operator lifts the handle 43 to move the second support portion 20 upward (see also FIG. 4). When the second support portion 20 moves upward to some extent, the inclined surface 23b of the engagement portion 23 comes into contact with the inclined surface 52c of the second attracted body 52b. When the second support portion 20 is further moved upward in this state, the inclined surface 23b of the engagement portion 23 presses the inclined surface 52c of the second attracted body 52b toward the rear (in the +Y direction) against the biasing force of the biasing body described above. Thereby, it is possible to temporarily retract the second attracted body 52b toward the rear. When the second support portion 20 is further moved upward, the inclined surfaces 23b and 52c separate from each other, and the second attracted body 52b returns to its original position due to the biasing force of the biasing body. Finally, the operator releases the handle 43 to return the second support portion 20 to its original position.

### <First support portion 10 and retraction mechanism 51>

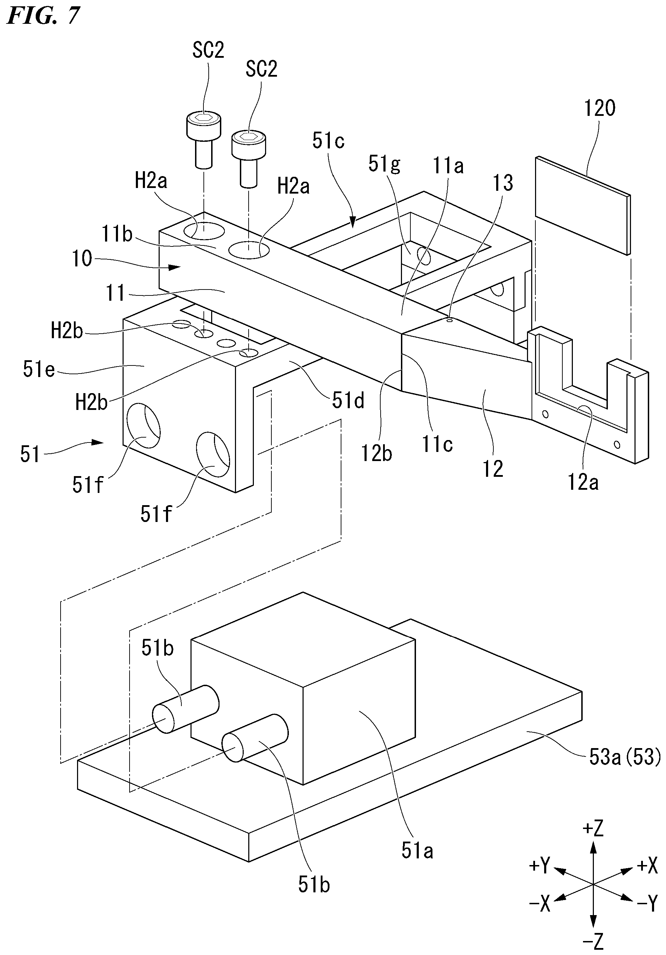

As illustrated in FIG. 7, the first support portion 10 according to the present embodiment has an extending portion 11 and a rotating portion 12.

The extending portion 11 extends in the front-rear direction Y. Hereinafter, a front end part (-Y end part) of the extending portion 11 will be referred to as a distal end part 11a, and a rear end part (+Y end part) of the extending portion 11 will be referred to as a base end part 11b. A contact surface 11c facing forward is provided in the distal end part 11a.

At least one (two in the illustrated example) screw hole H2a disposed at an interval in the front-rear direction Y is formed in the base end part 11b. The screw hole H2a penetrates the extending portion 11 in the vertical direction Z.

The rotating portion 12 is rotatably connected to the distal end part 11a of the extending portion 11 via a rotating shaft 13. Note that, the rotating shaft 13 is positioned in the vicinity of a right-side surface of the extending portion 11 and extends in the vertical direction Z. The rotating portion 12 has a contact surface 12b that comes into contact with the contact surface 11c of the extending portion 11. As the rotating portion 12 rotates, an angle formed by the contact surfaces 11c and 12b varies within a range from 0° to a predetermined angle α (α > 0°).

An attachment hole 12a to which the filter paper 120 is attached is formed in the rotating portion 12. The attachment hole 12a faces left in a state in which the angle formed by the contact surfaces 11c and 12b is 0°. Thereby, the filter paper 120 attached to the attachment hole 12a and the grid 110 supported by the second support portion 20 and the tweezer assembly 100 face each other in the left-right direction X (see FIG. 1).

In the present embodiment, the filter paper 120 (the first support portion 10) is provided on a single side (the right side) as viewed from the grid 110. That is, the filter paper 120 (the first support portion 10) is not provided on the other side (the left side) as viewed from the grid 110.

As illustrated in FIG. 7, the retraction mechanism 51 according to the present embodiment has a first magnetic attraction portion 51a, at least one (two in the illustrated example) first attracted body 51b, and a connection portion 51c.

The first attracted body 51b is a columnar conductor extending in the left-right direction X. In the illustrated example, the retraction mechanism 51 has two first attracted bodies 51b disposed at an interval in the front-rear direction Y.

The first magnetic attraction portion 51a is driven by a current and magnetically attracts the first attracted body 51b toward the right. The first magnetic attraction portion 51a may be, for example, two solenoid coils provided corresponding to the two first attracted bodies 51b.

The retraction mechanism 51 may have a biasing body (not illustrated) that biases the first attracted body 51b toward the left. In this case, when the current flowing through the first magnetic attraction portion 51a is stopped, it is possible to return the first magnetic attraction portion 51a that has been magnetically attracted to its original position (the position illustrated in FIG. 9A) by the biasing force of the biasing body.

The connection portion 51c connects the first support portion 10 and the first attracted body 51b. More specifically, the connection portion 51c in the illustrated example has an upper plate 51d, a front plate 51e, and a rear plate 51g, and has a U shape that is convex upward when viewed in the front-rear direction Y.

The rear plate 51g is positioned to the right of the first magnetic attraction portion 51a. The rear plate 51g extends in the vertical direction Z and the front-rear direction Y. The rear plate 51g extends downward from a right end part of the upper plate 51d.

The upper plate 51d is positioned above the first magnetic attraction portion 51a. The upper plate 51d extends in the left-right direction X and the front-rear direction Y. At least one (four in the illustrated example) screw hole H2b disposed at an interval in the front-rear direction Y is formed in an upper surface of a left end part of the upper plate 51d.

When a screw SC2 is threaded into the screw hole H2b through the screw hole H2a, the extending portion 11 of the first support portion 10 is fixed to the upper plate 51d. Note that, in order to configure the fixing position of the first support portion 10 with respect to the connection portion 51c to be changeable in the front-rear direction Y, in the illustrated example, the number of screw holes H2b is greater than the number of screw holes H2a.

The front plate 51e is positioned to the left of the first magnetic attraction portion 51a. The front plate 51e extends in the vertical direction Z and the front-rear direction Y. The front plate 51e extends downward from a left end part of the upper plate 51d. At least one (two in the illustrated example) connection hole 51f disposed at an interval in the front-rear direction Y is formed in a lower end part of the front plate 51e.

The connection hole 51f penetrates the front plate 51e in the left-right direction X. In each connection hole 51f, one first attracted body 51b is inserted and fixed. Thereby, the connection portion 51c and the first support portion 10 fixed thereto, and the first attracted body 51b move in the left-right direction X in conjunction with each other. Note that, in order to suppress relative rotation of the connection portion 51c (the first support portion 10) with respect to the first attracted body 51b, with the connection hole 51f (the first attracted body 51b) as a rotation axis, two connection holes 51f (first attracted bodies 51b) are provided to be arranged in the front-rear direction Y.

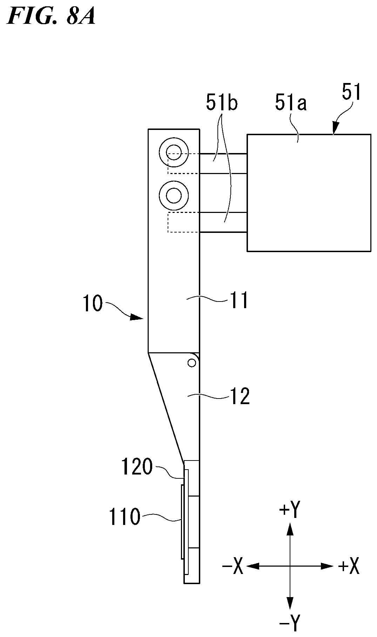

More specifically, in a state in which the first magnetic attraction portion 51a is not magnetically attracting the first attracted body 51b, the second support portion 20 is in a removal position as illustrated in FIG. 8A. The "removal position" is a position at which the filter paper 120 is able to remove the sample solution from the grid 110. More specifically, in the present embodiment, the "removal position" is a position at which the filter paper 120 is in contact with the grid 110. Note that, in FIGS. 8A to 8C, illustration of the connection portion 51c is omitted for ease of viewing.

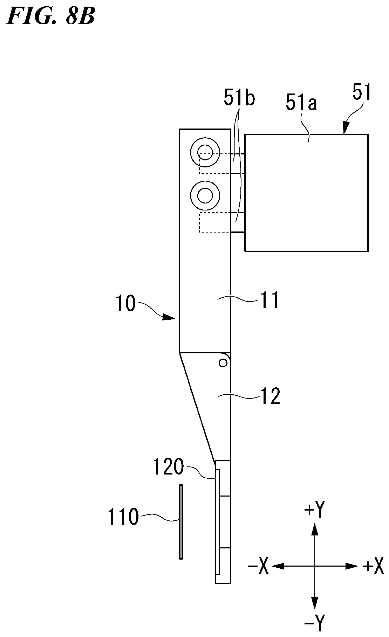

Then, when the first magnetic attraction portion 51a magnetically attracts the first attracted body 51b, the first attracted body 51b and the first support portion 10 move in conjunction with each other, causing the first support portion 10 to retreat rightward from the removal position (see FIG. 8B). In this way, the retraction mechanism 51 retracts the first support portion 10 from the removal position.

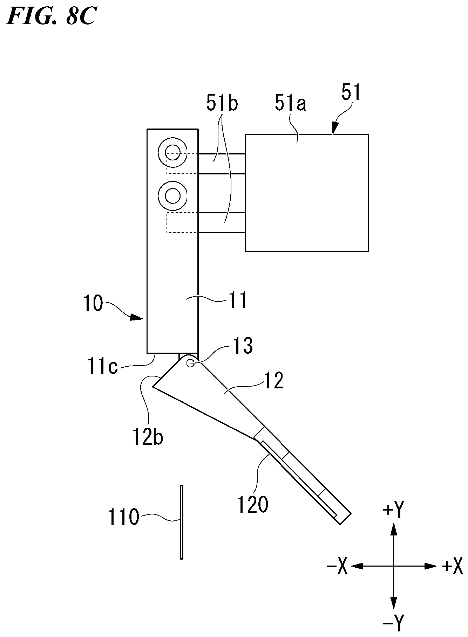

In the sample freezing device 1 according to the present embodiment, it is possible to separate the filter paper 120 from the grid 110 even without operating the retraction mechanism 51. Specifically, when the rotating portion 12 is rotated around the rotating shaft 13 so that the contact surfaces 11c and 12b move away from each other, it is possible to separate the filter paper 120 from the grid 110 (see FIG. 8C). Thereby, it is possible to inject the sample solution not only from the left side of the grid 110 but also from the right side.

A position of the first magnetic attraction portion 51a may be adjustable with respect to the stand 30. Specifically, as illustrated in FIG. 1, the sample freezing device 1 may have an adjustment mechanism 53 (for example, a micrometer) for adjusting the position of the first magnetic attraction portion 51a. For example, the adjustment mechanism 53 may include a fixing plate 53a on which the first magnetic attraction portion 51a is fixed, and a drive unit 53b that adjusts a position of the fixing plate 53a.

According to such an adjustment mechanism 53, it is possible to adjust a position of the second support portion 20 connected to the first attracted body 51b. Thereby, it is possible to adjust a relative position between the filter paper 120 and the grid 110. Note that, the first magnetic attraction portion 51a may be fixed to, for example, the stand 30 (bottom portion 31).

### <Optical unit 60>

As illustrated in FIG. 1 and FIGS. 9A to 9C, the optical unit 60 includes the first mirror 61 and the second mirror 62.

As illustrated in FIGS. 9A to 9C, the first mirror 61 is fixed to the base portion 41 of the guide portion 40. More specifically, the first mirror 61 is fixed to the mirror hole 41e of the base portion 41 (see FIG. 3). The second mirror 62 is fixed to the mirror fixing portion 48 of the guide portion 40.

In a state in which the first mirror 61 is fixed to the base portion 41, a reflecting surface 61a of the first mirror 61 is inclined toward the right as it goes downward. More specifically, the first mirror 61 is fixed to the base portion 41 so that the reflecting surface 61a is inclined by about 45° with respect to the vertical direction Z. Thereby, the first mirror 61 reflects light irradiated from the left downward.

In a state in which the second mirror 62 is fixed to the mirror fixing portion 48, a reflecting surface 62a of the second mirror 62 is inclined toward the right as it goes downward. More specifically, the second mirror 62 is fixed to the mirror fixing portion 48 so that the reflecting surface 62a is inclined by about 45° with respect to the vertical direction Z. Thereby, the second mirror 62 reflects light irradiated from above toward the right.

In a state in which the mirrors 61 and 62 are fixed to the guide portion 40 (the base portion 41 and the mirror fixing portion 48), the first mirror 61 (the reflecting surface 61a) and the second mirror 62 (the reflecting surface 62a) are aligned in the vertical direction Z. In a state in which the second mirror 62 is fixed to the mirror fixing portion 48, the second mirror 62 (the reflecting surface 62a) and the grid 110 are aligned in the left-right direction X.

The light source 140 is used in a state in which it is disposed to the left of the first mirror 61. In this state, when the light source 140 irradiates light toward the right, the light is reflected by the mirrors 61 and 62 and reaches the grid 110. That is, the optical unit 60 changes (reflects) a traveling direction of the light from the light source 140 so that the grid 110 is irradiated with the light from the light source 140. In other words, the optical unit 60 generates the irradiation path R along which the grid 110 is capable of being irradiated with the light from the light source 140. The light source 140 may be, for example, a laser light source.

As described above, in the sample freezing device 1 according to the present embodiment, the second support portion 20 moves downward (drops) by the action of the movement mechanism (the restriction mechanism 52 and the guide portion 40). Here, the mirror fixing portion 48 is connected to the second support portion 20 via the guide rods 42A and 42B. Therefore, as illustrated in FIGS. 9A to 9C, the second mirror 62 fixed to the mirror fixing portion 48 moves (drops) following the second support portion 20 during the movement (drop) described above. That is, from before the movement (before the drop) of the second support portion 20 to after the movement (after the drop), a relative position between the second mirror 62 (the reflecting surface 62a) and the grid 110 is always maintained.

Thereby, the irradiation path R, along which the grid 110 is capable of being irradiated with the light from the light source 140, is always maintained from before the movement (before the drop) of the second support portion 20 to after the movement (after the drop). Therefore, at any timing between, for example, when the grid 110 supported by the second support portion 20 is impregnated with the sample solution and when the grid 110 enters the freezing space S, it is possible for the grid 110 to be irradiated with the light from the light source 140.

Note that, in order to prevent damage to the second mirror 62 when the grid 110 enters the freezing space S, it is desirable that a shape and the like of the mirror fixing portion 48 be appropriately designed. More specifically, a shape and the like of the mirror fixing portion 48 may be designed such that the mirror fixing portion 48 or the second mirror 62 does not come into contact with the freezing container 130 when the movement (drop) of the second support portion 20 ends. For example, a shape and the like of the mirror fixing portion 48 may be designed such that the mirror fixing portion 48 and the second mirror 62 are positioned inside the recessed portion 131 of the freezing container 130 when the movement (drop) of the second support portion 20 ends.

### <Control unit 70>

The control unit 70 controls the movement mechanism (the restriction mechanism 52 and the guide portion 40) and the restriction mechanism 52 (see FIG. 1). The control unit 70 according to the present embodiment controls the current flowing through the magnetic attraction portions 51a and 52a.

More specifically, the control unit 70 according to the present embodiment controls retraction of the first support portion 10 by the retraction mechanism 51 and movement of the second support portion 20 by the movement mechanism so that a cooling standby time T is one second or less. Note that, it is more preferable that the control unit 70 control the retraction of the first support portion 10 by the retraction mechanism 51 and the movement of the second support portion 20 by the movement mechanism so that the cooling standby time T becomes 0.5 seconds or less. Here, the "cooling standby time T" is defined as a time from when the first support portion 10 begins to retract from the removal position (see FIGS. 8A and 8B) until the grid 110 enters the inside of the freezing space S (see FIGS. 9A to 9C).

The control unit 70 may be realized by a computer such as a microcomputer, a personal computer, or a workstation. When the control unit 70 is realized by a computer, functions of the control unit 70 are realized by a program for realizing the functions being executed by a central processing unit (CPU) provided in the computer. That is, the functions of the control unit 70 are realized through cooperation between software and hardware resources. Note that, the control unit 70 may be realized using hardware such as a field-programmable gate array (FPGA), a large scale integration (LSI), or an application specific integrated circuit (ASIC).

### <Operation and effects>

Next, an operation and effects of the sample freezing device 1 configured as above will be described.

Conventionally, a sample solution freezing device described in Non-Patent Document 1 is known. As a result of experiments conducted by inventors of the present application, it was found that, in the sample solution freezing device described in Non-Patent Document 1, it may be difficult to freeze a sample in a desired state. More specifically, it was found that, in the sample solution freezing device described in Non-Patent Document 1, the sample tends to be frozen in a certain specific orientation, making it difficult to freeze the sample in various orientations.

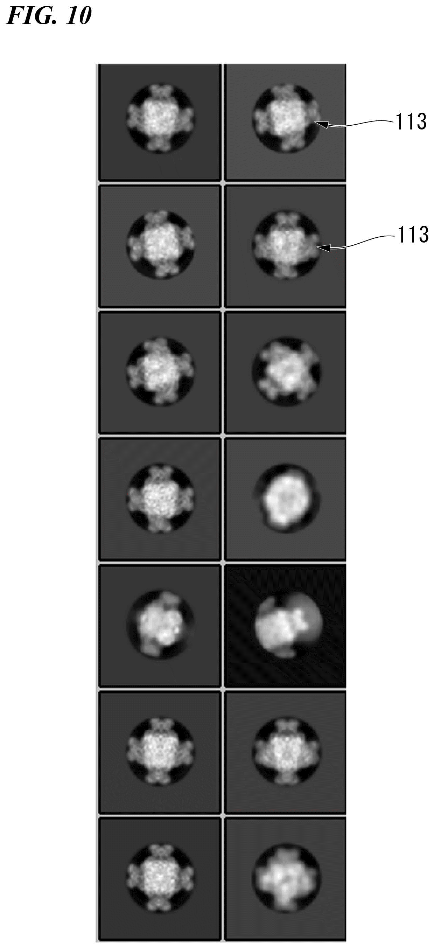

FIG. 10 is an image (specifically, a two-dimensional averaged image) obtained by capturing the sample 113 frozen by the sample freezing device described in Non-Patent Document 1. Specifically, a sample solution containing a plurality of samples 113 was frozen using the sample freezing device of Non-Patent Document 1, and the sample solution after freezing was imaged. The 14 images shown in FIG. 10 represent averaged images of groups of 14 different types of samples 113 contained in the frozen sample solution. Note that, the samples 113 used in this experiment are protein particles.

As shown in FIG. 10, the samples 113 shown in the 14 images are oriented in almost the same direction. This means that it is difficult to observe the samples 113 three-dimensionally based on the images obtained in this experiment. Also, even if the freezing of the sample solution is repeated a plurality of times, the samples 113 remain oriented in almost the same direction, making it still difficult to observe the samples 113 three-dimensionally. As described above, the inventors of the present application have clarified that it may be difficult to perform a three-dimensional structural analysis of the sample 113 on the basis of the sample solution frozen by the sample freezing device of Non-Patent Document 1. In this experiment, the cooling standby time T in the sample freezing device of Non-Patent Document 1 was greater than one second. Specifically, the cooling standby time T in the sample freezing device of Non-Patent Document 1 was about 3 to 4 seconds.

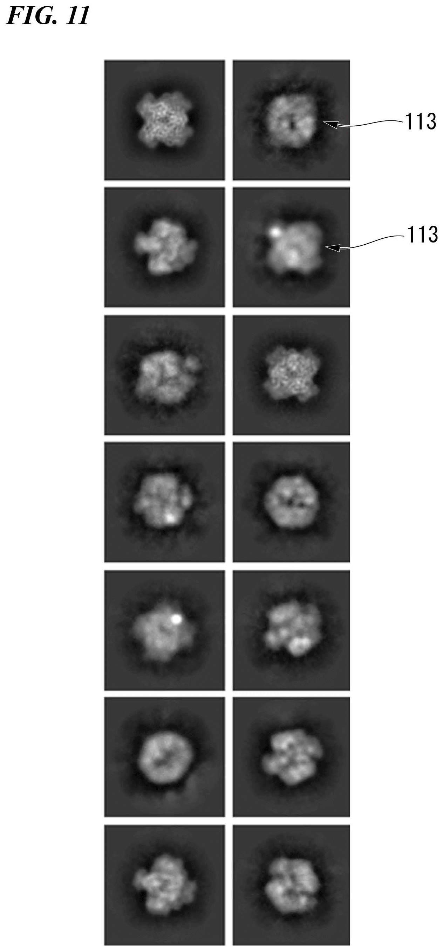

FIG. 11 is an image (specifically, a two-dimensional averaged image) obtained by capturing the sample 113 frozen by the sample freezing device 1 according to the present embodiment. Specifically, a sample solution containing the plurality of samples 113 was frozen using the sample freezing device 1 according to the present embodiment, and the sample solution after freezing was imaged. That is, FIG. 11 shows results of an experiment in which the cooling standby time T was set to one second or less. The 14 images shown in FIG. 11 represent averaged images of groups of 14 different types of samples 113 contained in the frozen sample solution. Note that, the samples 113 used in this experiment are the same protein particles as the samples 113 used in the experiment of FIG. 10.

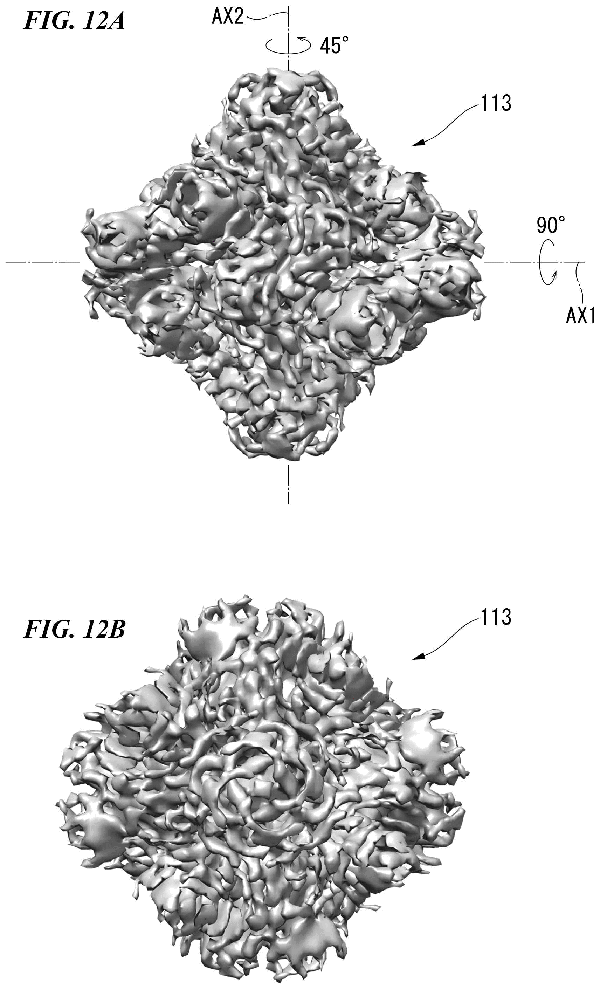

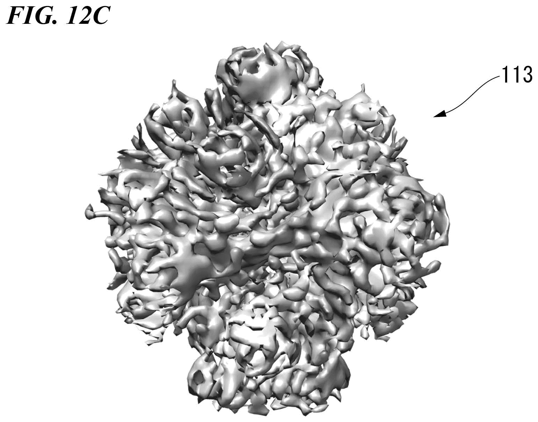

As shown in FIG. 11, the samples 113 shown in the 14 images are oriented in various directions. In this way, the inventors of the present application have experimentally clarified that, by reducing the cooling standby time T (specifically, to one second or less), it is possible to freeze the sample solution in a state in which the samples 113 are oriented in various directions. FIGS. 12A to 12C show three-dimensional models of the sample 113 obtained by three-dimensional structural analysis on the basis of the images obtained in this experiment. As shown in FIGS. 12A to 12C, the inventors of the present application have succeeded in creating a three-dimensional model of the sample 113 using the sample freezing device 1 in which the cooling standby time T is one second or less. Note that, the three-dimensional models shown in FIGS. 12A to 12C were obtained by the first freezing performed using the sample freezing device 1.

Hereinafter, factors that have made it possible to observe the sample 113 from various orientations by reducing the cooling standby time T will be discussed. Before the operator impregnates the grid (the impregnation portion) with the sample solution, the sample solution is stored in a predetermined container. At this time, the sample solution has a sufficient volume such that influences of a surface tension of the sample solution, forces resulting from evaporation of the sample solution, and the like on the sample 113 are negligible. However, a volume of the sample solution dispensed from the container and held on the grid (impregnation portion) is significantly smaller than when it was stored in the container. Thereby, in the sample solution held on the grid, it is considered that the surface tension of the sample solution, the forces resulting from evaporation of the sample solution, and the like act on the sample 113. Then, it is considered that these forces gradually cause the orientations of the samples 113 to align in the same direction. Reducing the cooling standby time T means reducing the time during which these forces act on the sample 113. Therefore, it is considered that reducing the cooling standby time T makes it possible to observe the sample 113 from various orientations as in the experiment shown in FIG. 11.

As described above, in the sample solution freezing device described in Non-Patent Document 1, the cooling standby time T was greater than one second. However, during the cooling standby time T, evaporation of the sample solution from the grid or the like may proceed, and a state of the sample solution (such as humidity) may change. Therefore, there were cases in which it was difficult to freeze the sample in a desired state. Note that, in Non-Patent Document 1, a humidification chamber that houses the entire sample freezing device 1 was provided to prevent evaporation of the sample solution.

As a result of extensive studies, the inventors of the present application have found that it is difficult to reduce the cooling standby time T to one second or less in the sample solution freezing device described in Non-Patent Document 1. This is because, in the device, a motor-driven arm is used as a retraction mechanism for retracting the filter paper from the grid, and an operation of the arm is slow.

To address this issue, according to the sample freezing device 1 of the present embodiment, it is possible to make the cooling standby time T one second or less. Therefore, according to the sample freezing device 1 of the present embodiment, it is easier to freeze the sample in a desired state compared to conventional devices. Particularly, a configuration in which the cooling standby time T is 0.5 seconds or less is preferable in that it makes it even easier to freeze the sample in a desired state. Since the cooling standby time T is short (one second or less, or 0.5 seconds or less) and it is possible to suppress changes in the state of the sample, it is not necessary to provide a humidification chamber such as that in Non-Patent Document 1. Therefore, it is also possible to make the sample freezing device 1 smaller.

A length of the cooling standby time T is affected by a length of a retraction time t1 and a movement time t2. Here, the "retraction time t1" is defined as a time from when the first support portion 10 begins to retract from the removal position until the retraction of the first support portion 10 ends (until the magnetic attraction by the first magnetic attraction portion 51a ends). The "movement time t2" is defined as a time from when the second support portion 20 begins to move (drop) (from when the restriction by the restriction mechanism 52 is released) until the grid 110 enters the inside of the freezing space S.

In the sample freezing device 1 according to the present embodiment, the first magnetic attraction portion 51a, which is capable of being controlled at high speed, is used in the restriction mechanism 52 for retracting the filter paper 120 (first support portion 10). Thereby, compared to the device of Non-Patent Document 1 that uses a motor-driven arm, it is possible to reduce the retraction time t1 (specifically, to 0.3 seconds or less, and more preferably to 0.1 seconds or less). Thereby, it is possible to reduce the cooling standby time T.

Similarly, in the sample freezing device 1 according to the present embodiment, the second magnetic attraction portion 52a, which is capable of being controlled at high speed, is used in the movement mechanism for moving the grid 110 (second support portion 20). Thereby, it is possible to reduce the movement time t2 (specifically, to several hundred milliseconds or less, and more preferably to 50 milliseconds or less). Thereby, it is possible to reduce the cooling standby time T.

Note that, the control unit 70 may control the retraction mechanism 51 and the movement mechanism such that the movement of the second support portion 20 by the movement mechanism begins before the retraction of the filter paper 120 by the retraction mechanism 51 is completed. That is, the retraction time t1 and the movement time t2 may overlap.

For example, in a case of a sample whose state changes over time when irradiated with light, there are cases in which it is desirable to irradiate the sample with light at an arbitrary timing before freezing the sample. In the device of Non-Patent Document 1, arms supporting the filter paper are disposed on both sides of the grid, and the entire device is covered by a humidification chamber (to be described later). Therefore, it was difficult to irradiate the sample solution held on the grid in the device with light.

In contrast, in the sample freezing device 1 according to the present embodiment, the filter paper 120 (first support portion 10) is provided only on a single side as viewed from the grid 110. In addition, in the sample freezing device 1 according to the present embodiment, a chamber covering the sample freezing device 1 is not provided. Therefore, it is possible to irradiate the grid 110 with the light from the light source 140 via, for example, the optical unit 60.

Further, in the sample freezing device 1 according to the present embodiment, the irradiation path R is constantly maintained during the movement (drop) of the grid 110. Therefore, at any timing between, for example, when the grid 110 supported by the second support portion 20 is impregnated with the sample solution and when the grid 110 enters the freezing space S, it is possible to irradiate the grid 110 with the light from the light source 140. Thereby, it is possible to smoothly perform observation of the sample whose state changes over time due to light.

### <Summary>

As described above, the sample freezing device 1 according to the present embodiment includes the first support portion 10 that supports the filter paper 120 (removal portion) for removing the excess sample solution 114 from the grid 110 (impregnation portion) impregnated with the sample solution 114, the retraction mechanism 51 that retracts the first support portion 10 from a removal position at which the filter paper 120 is able to remove the sample solution 114 from the grid 110, the second support portion 20 that supports the filter paper 120, the movement mechanism (the restriction mechanism 52 and the guide portion 40) that moves the second support portion 20 so that the grid 110 enters the inside of the freezing space S in which the sample solution 114 is frozen, and the control unit 70 that controls the retraction mechanism 51 and the movement mechanism, in which the control unit 70 controls retraction of the first support portion 10 by the retraction mechanism 51 and movement of the second support portion 20 by the movement mechanism so that the time (cooling standby time T) from when the first support portion 10 begins to retract from the removal position until the grid 110 enters the inside of the freezing space S is one second or less.

With this configuration, it is possible to provide the sample freezing device 1 that facilitates freezing a sample in a desired state.

The retraction mechanism 51 includes the first attracted body 51b moving in conjunction with the first support portion 10, and the first magnetic attraction portion 51a driven by a current to magnetically attract the first attracted body 51b, and the control unit 70 controls the current flowing through the first magnetic attraction portion 51a. With this configuration, it is possible to reduce the retraction time t1. Thereby, it is possible to easily achieve the cooling standby time T of one second or less.

The movement mechanism includes the second attracted body 52b engaging with the second support portion 20 to restrict the movement of the second support portion 20, and the second magnetic attraction portion 52a driven by a current to magnetically attract the second attracted body 52b so that the engagement between the second attracted body 52b and the second support portion 20 is released, and the control unit 70 controls the current flowing through the second magnetic attraction portion 52a. With this configuration, it is possible to reduce the movement time t2. Thereby, it is possible to easily achieve the cooling standby time T of one second or less.

The movement mechanism includes the biasing portion 45 for promoting movement of the second support portion 20. With this configuration, it is possible to further reduce the movement time t2.

The filter paper 120 is provided on a single side as viewed from the grid 110. With this configuration, it is easier to realize a configuration in which the grid 110 is capable of being irradiated with the light from the light source 140.

The sample freezing device 1 according to the present embodiment further includes the optical unit 60 that changes a traveling direction of the light from the light source 140 so that the grid 110 is irradiated with the light from the light source 140. With this configuration, it is possible to easily irradiate the grid 110 with the light from the light source 140.

At least a part of the optical unit 60 (the second mirror 62) moves following the grid 110 when the grid 110 moves toward the freezing space S by the movement mechanism. With this configuration, since the irradiation path R is constantly maintained during the movement (drop) of the grid 110, it is possible to irradiate the grid 110 with the light from the light source 140 at any timing.

### <Modified example>

Note that, the technical scope of the present invention is not limited to the above-described embodiment, and various modifications may be made in a range not departing from the spirit of the present invention.

For example, the impregnation portion into which the sample solution is impregnated need not be the grid 110 and may be changed as appropriate. Similarly, the removal portion for removing the excess sample solution need not be the filter paper 120 and may be changed as appropriate.

As long as it is possible to appropriately maintain the positional relationship among the respective components of the sample freezing device 1, the sample freezing device 1 need not include the stand 30.

As long as the freezing space S capable of freezing the sample solution 114 is provided, the configuration of the freezing container 130 may be changed as appropriate. Alternatively, the freezing space S is not limited to a space provided inside a container such as the freezing container 130, and may be changed as appropriate.

As long as it is possible to achieve the cooling standby time T of one second or less, configurations of the movement mechanism and the retraction mechanism 51 may be changed as appropriate. For example, the movement mechanism may be configured to move the guide rods 42A and 42B by a motor such as a linear motor. The movement mechanism may include a spring mechanism, an air syringe, a wire pulley, or the like, may include a high-speed motorized stage or the like, or may include a mechanism utilizing the principle of leverage.

In the above-described embodiment, the second support portion 20 indirectly supports the grid 110 via the tweezer assembly 100, but the second support portion 20 may be configured to directly support the grid 110.

As long as it is possible to secure the irradiation path R, the configuration of the optical unit 60 may be changed as appropriate. For example, if the light source 140 is provided above the second mirror 62 and the light source 140 irradiates light downward, the optical unit 60 need not include the first mirror 61. The optical unit 60 may change a traveling direction of the light from the light source 140 by using refraction of light. Note that, for example, in a case in which a sample that does not react to light is used or the like, the sample freezing device 1 need not include the optical unit 60.

In addition, the components in the above-described embodiments may be appropriately replaced with well-known components within a range not departing from the spirit of the present invention, and the embodiments and modified examples described above may be appropriately combined.

### REFERENCE SIGNS LIST

1 Sample freezing device
10 First support portion
20 Second support portion
40 Guide portion (movement mechanism)
45 Biasing portion
51 Retraction mechanism
51a First magnetic attraction portion
51b First attracted body
52 Restriction mechanism (movement mechanism)
52a Second magnetic attraction portion
52b Second attracted body
60 Optical unit
70 Control unit
110 Grid (impregnation portion)
114 Sample solution
120 Filter paper (removal portion)
S Freezing space

## Claims

1. A sample freezing device comprising:
a first support portion supporting a removal portion for removing an excess sample solution from an impregnation portion impregnated with the sample solution;
a retraction mechanism retracting the first support portion from a removal position at which the removal portion is able to remove the sample solution from the impregnation portion;
a second support portion supporting the impregnation portion;
a movement mechanism moving the second support portion so that the impregnation portion enters the inside of a freezing space in which the sample solution is frozen; and
a control unit configured to control the retraction mechanism and the movement mechanism, wherein
the control unit controls retraction of the first support portion by the retraction mechanism and movement of the second support portion by the movement mechanism so that a time from when the first support portion begins to retract from the removal position until the impregnation portion enters the inside of the freezing space is one second or less.

2. The sample freezing device according to claim 1, wherein
the retraction mechanism includes:
a first attracted body moving in conjunction with the first support portion; and
a first magnetic attraction portion driven by a current to magnetically attract the first attracted body, and
the control unit controls the current flowing through the first magnetic attraction portion.

3. The sample freezing device according to claim 1 or 2, wherein
the movement mechanism includes:
a second attracted body engaging with the second support portion to restrict movement of the second support portion; and
a second magnetic attraction portion driven by the current to magnetically attract the second attracted body so that the engagement between the second attracted body and the second support portion is released, and
the control unit controls the current flowing through the second magnetic attraction portion.

4. The sample freezing device according to claim 1 or 2, wherein the movement mechanism includes a biasing portion for promoting movement of the second support portion.

5. The sample freezing device according to claim 1 or 2, wherein the removal portion is provided on a single side as viewed from the impregnation portion.

6. The sample freezing device according to claim 1 or 2, further comprising an optical unit configured to change a traveling direction of light from a light source so that the impregnation portion is irradiated with the light from the light source.

7. The sample freezing device according to claim 6, wherein at least a part of the optical unit moves following the impregnation portion when the impregnation portion is moved toward the freezing space by the movement mechanism.
